# EUROPEAN PATENT APPLICATION

(11) **EP 3 626 448 A1**
(43) Date of publication of application: **25.03.2020**
(21) Application number: 19197497.1
(22) Date of filing: 16.09.2019
(51) Int. Cl.: B32B 27/16, B32B 27/08, B32B 27/30, B32B 27/32, B32B 27/34, B32B 27/36

(54) **CROSSLINKED FILM COMPRISING POLYBUTYLENE SUCCINATE**

(30) Priority: 20.09.2018 EP 18195643
(71) Applicant: Flexopack S.A., 194 00 Koropi (GR)
(72) Inventor: GINOSATIS, Dimitris, 19400 Koropi Attica (GR)
(74) Representative: Isarpatent

(57) **Abstract**

The invention relates to a crosslinked multilayer film comprising polybutylene succinate suitable for vacuum skin packaging.

## Description

The invention relates to a multilayer film comprising polybutylene succinate. The film is crosslinked and is suitable for vacuum skin packaging.

### BACKGROUND

Vacuum skin packaging is a known packaging process in which after food is placed in a container (often a tray), air is drawn from the package prior to sealing it close. Such packaging has comparable storage and preservation characteristics to shrinkable packaging and usually is more eye appealing.

The vacuum skin packaging in general involves two packaging containers:
1. The top lid film which conforms onto the product
2. The bottom thermoformable film which is formed into a tray during the first step of the packing process and where-into the food is placed prior to the vacuum step. Often, a ready-made tray is used instead of a bottom thermoformable film.

The top lid films used in the vacuum skin packaging applications are very demanding as per melt strength. Due to the high temperatures and high extensibility required by the application, the melt strength must be enough so that the film does not melt, tears or sticks to the hot parts of the machine.

Application EP0243510 teaches the use of big layers of EVA (ethylene vinyl acetate) in vacuum skin packaging films. Application EP 0 343 877 A2 describes the use of ionomers preferably in the sealing layer of such films. However, over the years, a very limited number of polymers were found to have the adequate melt strength to work efficiently as vacuum skin packaging films.

However, there are still cases where the products to be packed are so irregular in shape so that there are some % of failure due to breakages (blow outs). Therefore, there is still need in the market for finding a material to accommodate such type of issues.

Thus, an object of the present invention is to provide a multilayer with improved properties, in particular with an improved strength. The film shall provide improved strength to avoid breakages (blow outs) when using the film in vacuum skin packaging applications.

### SUMMARY OF THE INVENTION

The invention refers to a crosslinked multilayer film, suitable for vacuum skin packaging process, comprising at least 20% polybutylene succinate per volume. Preferably, the film is crosslinked by electron beam or gamma radiation.

### DEFINITIONS

In this application the following definitions are used:
The term "vacuum skin packaging" is interpreted as well known in the art. That is, a process where a top lid film is drawn so that it conforms to the product to be packed and seals at a bottom film or tray.

The term "film" refers to a flat or tubular flexible structure of thermoplastic material.

The term "multilayer film" as used herein refers to a film comprising at least two layers.

As used herein the term "top lidding film" refers to the film which conforms to the product during the vacuum skin packaging process. It is also called "top lid film" or "top film".

The term "heat shrinkable" refers to a film that shrinks at least 10% in at least one of the longitudinal and transverse directions when heated at 90°C for 4 seconds. The shrinkability is measured according to ASTM 2732.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

The phrase "intermediate layer" refers to any layer of the film that is neither outer nor inner layer. A film may comprise more than one intermediate layers.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra-low density polyethylene (ULDPE), metallocene catalyzed polymers and polyethylene plastomers and elastomers.

In these cases the alpha olefin can be propene, butene, hexene, octene etc as known in the art.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the term "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the term "ethylene methacrylate copolymers" refers to copolymers of ethylene and methacrylate monomer. The monomer content is less than 40% by weight. Abbreviation used is EMA.

As used herein the phrase "ethylene vinyl acetate copolymer" refers to copolymers of ethylene and vinyl acetate. Abbreviation used is EVA.

As used the term "crosslinked EVA" refers to copolymers of ethylene and vinyl acetate which have created crosslink structure. This is achieved often by radiation or by using peroxides. The crosslinking is usually done during extrusion of the film or at a later stage.

As used herein, the term EVOH refers to saponified products of ethylene vinyl ester copolymers. The ethylene content is typically in the range of 25 to 50% per mol..

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers.

As used herein the term "ionomer" refers to ethylene-acid copolymers which have been neutralized by metals such as sodium, zinc, lithium or others.

The acid used is usually methacrylic or acrylic acid.

As used herein, the term "ethylene acid copolymer" refers to copolymers of ethylene with acid, most usually methacrylic or acrylic acid.

As used herein, the term "polyester" includes crystalline polymers, amorphous polymers and polyester elastomers. Common polyesters are crystalline PET (polyethylene terephthalate), amorphous PET, PETG (glycol modified polyethylene terephthalate), PBT(polybutylene terephthalate), PTT(polytrimethylene terephthalate), PBN(polybutylene naphthalate), PEN(polyethylene naphthalate), polyester-ether block copolymers and polyester-ester block copolymers of hard and soft blocks. Other polyester materials are also included in the above definition.

As used herein, the term "polybutylene succinate" refers to homopolymer or copolymer of succinic acid and butanediol. The monomers used can be produced by synthetic means or biobased means. Copolymers such as polybutylene succinate adipate(PBSA), polybutylene succinate terephthalate and others are inside the scope of the term as used herein.

Unless otherwise indicated the percentage values given herein refer to % by weight.

### DETAILED DESCRIPTION OF THE INVENTION

The present invention describes a crosslinked multilayer film comprising at least 20% per volume polybutylene succinate.

The film comprises at least two layers, preferable 3 to 12 layers, more preferably 7 to 12 layers.

In a preferred embodiment the film has a 7 layer construction like
Outer layer/ intermediate layer 1/ tie layer 1/ barrier layer/ tie layer 2/ intermediate layer 2/ sealing layer
Where the intermediate layer 1 can be same or different as intermediate layer 2 and tie layer 1 can be same or different as tie layer 2.

Preferably at least one of intermediate layer 1 and intermediate layer 2 comprise polybutylene succinate. In a more preferred version, both intermediate layers comprise polybutylene succinate.

In a preferred version the film is crosslinked by electron beam or gamma radiation. The crosslinking dose is preferably 0.1 to 40 Mrad, more preferably 5 to 30 Mrad.

The melting point of the polybutylene succinate is preferably less than 120°C, more preferably less than 100°C, even more preferably less than 90°C.

The film is preferably produced by the hot blown film method.

### FILM CONSTRUCTION

Preferably the film comprises 3 to 12 layers, more preferably 7 to 12 layers. A typical example of the film construction in 7 layer mode is
Outer layer/ intermediate layer 1/ tie layer 1/ barrier layer/ tie layer 2/ intermediate layer 2/ sealing layer

### Barrier layer(s)

The film in a preferable version contains high oxygen barrier materials so that it protects the components of the pack from the detrimental effect of oxygen ingress. EVOH is a preferred option but also polyamide and PVDC are viable alternatives. The EVOH is preferably 24 to 50% ethylene per mol, more preferably 27 to 48%.

The thickness of the barrier layer is preferably 3 to 15 microns, more preferably 2 to 10 microns.

### Intermediate layer(s)

Preferably, the intermediate layers comprise polybutylene succinate.

In an alternative embodiment polybutylene succinate is used in blend with one of the following polymers:
Ethylene ester copolymers, such as EVA, EMA, EBA and the like.
Aliphatic polyesters, like polyethylene succinate, polybutylene succinate adipate, polybutylene adipate terephthalate and the like.
Polycaprolactone
lonomers like Surlyn from Dupont.
Polyvinyl acetate.
Thermoplastic polybutadiene.

The bend can comprise polybutylene succinate in a range from 1% by weight to 99% per weight.

Preferably the lower limit of the range of polybutylene succinate in the blend in weight % is 5, 10, 15, 20, 25, 30, 35, 40, 45, 50, 55, 60, 65, 70, 75, 80, 85, 90, or 95 %.

Preferably the upper limit of the range of polybutylene succinate in the blend in weight % is 95, 90, 85, 80 75, 70, 65, 60, 55, 50, 45, 40, 35, 30, 25, 20, 15, 10, or 5 %.

### Tie layer(s)

Suitable materials for the tie layers include maleic anhydride modified EVA, maleic anhydride modified polyethylene, maleic anhydride modified EMA, maleic anhydride modified elastomer, partially saponified EVA copolymer and polyurethane elastomer.

Equally suitable material could be maleic anhydride modified aliphatic polyester, even maleic anhydride modified polybutylene succinate.

### Outer layer

The outer layer of the film preferably comprises LLDPE, LDPE or HDPE produced by Ziegler Natta or metallocene catalyst.

### Inner layer

The inner layer of the film would be able to seal the film to the container (bottom film or tray). Preferable options for this layer include EVA copolymer, EMA copolymer, ethylene acid copolymer and ionomer.

In general, the above layers may comprise further well known in the art additives such as antiblock, slip, antifog, polymer processing enhancers and others. Additives that would enhance the crosslinking are also inside the scope of the invention as long as they are approved for food contact.

### Crosslinking

The crosslinking may be done by various methods but the preferred are e-beam, gamma radiation and peroxides. A well-known method to measure the degree of crosslinking in ethylene plastic films is ASTM D2765 (determination of gel content).

The gel content of the film is preferably 30% or more, more preferably 50% or more, even more preferably 75% or more, and most preferably 80% and more.

### EXAMPLES

### EXAMPLE 1

From a commercial hot blown film line the following film was produced:

| | |
|---|---|
| Outer layer | thickness 8 microns |
| Intermediate layer 1 | thickness 33 microns |
| Tie layer 1 | thickness 10 microns |
| EVOH | thickness 8 microns |
| Tie layer 2 | thickness 10 microns |
| Intermediate layer 2 | thickness 15 microns |
| Inner layer | thickness 16 microns |

| | |
|---|---|
| Where the Outer layer is 100% HDPE with density 0.950 and MFI 1 at 190°C, 2.16 KG Intermediate layers 1 and 2 are polybutylene succinate. Tie layer 1 and 2 are anhydride modified LLDPE. Inner layer comprises a ready-made EVA based compound. | |

The film was irradiated at a level to achieve a gel content of 55%.

### EXAMPLE 2

From a commercial hot blown film line the following film was produced:

| | |
|---|---|
| Outer layer | thickness 8 microns |
| Intermediate layer 1 | thickness 33 microns |
| Tie layer 1 | thickness 10 microns |
| EVOH | thickness 8 microns |
| Tie layer 2 | thickness 10 microns |
| Intermediate layer 2 | thickness 15 microns |
| Inner layer | thickness 16 microns |

| | |
|---|---|
| Where the Outer layer is 100%HDPE with density 0.950 and MFI 1 at 190C, 2.16KG. Intermediate layer 1 is polybutylene succinate Intermediate layer 2 is EVA 18% VA content by weight Tie layer 1 and 2 are anhydride modified LLDPE Inner layer comprises an ethylene acrylic acid copolymer | |

The film was irradiated at a level to achieve a gel content of 60%.

### EXAMPLE 3

From a commercial hot blown film line the following film was produced:

| | |
|---|---|
| Outer layer | thickness 8 microns |
| Intermediate layer 1 | thickness 33 microns |
| Tie layer 1 | thickness 10 microns |
| EVOH | thickness 8 microns |
| Tie layer 2 | thickness 10 microns |
| Intermediate layer 2 | thickness 15 microns |
| Inner layer | thickness 16 microns |

| | |
|---|---|
| Where the Outer layer is 100%HDPE with density 0.950 and MFI 1 at 190C, 2.16C. Intermediate layer 1 is a blend of 90% by weight polybutylene succinate + 10% by weight polyvinyl acetate Intermediate layer 2 is a blend of 90%by weight polybutylene succinate + 10% by weight polyvinyl acetate Tie layer 1 and 2 are anhydride modified LLDPE Inner layer comprises an ethylene acrylic acid copolymer | |

The film was irradiated at a level to achieve a gel content of 55%.

### COMPARATIVE EXAMPLE

Same film as per example 1 was produced but the two intermediate layers comprised Surlyn 1601.

The four films were tested in a vacuum skin packaging machine, packing meat dummies and recording the blow out failures during the operation. The failure percentages are as of below

| | |
|---|---|
| Example 1 | 5% failures |
| Example 2 | 4% failures |
| Example 3 | 2% failures |
| Comparative example | 7% failures |

The packs produced of films as per example 1, 2, and 3 had a nice behavior in the vacuum skin packaging machines and produced appealing packs. In contrast to that the film of comparative example with an Intermediate layer not comprising polybutylene succinate shows more blow out failures during the packaging of the meat dummy.

## Claims

1. A multilayer crosslinked film comprising at least 20% per volume polybutylene succinate.

2. The multilayer film according to claim 1, further comprising a barrier material.

3. The multilayer film according to one of the preceding claims, wherein the polybutylene succinate has a melting point of less than 120°C.

4. The multilayer film according to one of the preceding claims, wherein the polybutylene succinate is added in blend with at least one material selected from the list of the following materials: ethylene ester copolymer, aliphatic polyester, polycaprolactone, ionomer, polyvinyl acetate, thermoplastic polybutadiene.

5. The multilayer film according to claim 4, wherein the ethylene ester copolymer is selected from EVA, EMA, EBA and the like; the aliphatic polyester is selected from polyethylene succinate, polybutylene succinate adipate, polybutylene adipate terephthalate and the like.

6. The multilayer film according to one of the preceding claims, wherein the polybutylene succinate is comprised in an intermediate layer.

7. The multilayer film according to one of the preceding claims, wherein the barrier material is comprised in a barrier layer.

8. The multilayer film according to one of the preceding claims, wherein the multilayer film barrier material is comprised in a barrier layer.

9. The multilayer film according to one of the preceding claims, wherein the multilayer film has the following layer structure outer layer/ intermediate layer 1/ tie layer 1/ barrier layer/ tie layer 2/ intermediate layer 2/ sealing layer.

10. Use of the multilayer film according to one of the preceding claims for food packaging.

11. Use of the multilayer film according to one of claim 1 to 9 for vacuum skin packaging.

12. Use according to claim 11, wherein the film is used as a top lid film.
